Europäisches Patentamt

European Patent Office

Office européen des brevets

(11) Publication number: **0 130 504**
**A1**

(12) # EUROPEAN PATENT APPLICATION

(21) Application number: **84107198.8**

(22) Date of filing: **22.06.84**

(51) Int. Cl.⁴: **H 01 M 4/40, H 01 M 6/14**

(30) Priority: **24.06.83 US 507667**

(43) Date of publication of application: **09.01.85 Bulletin 85/2**

(84) Designated Contracting States: **DE FR GB**

(71) Applicant: **RAYOVAC Corporation, 101 East Washington Avenue, Madison Wisconsin 53703 (US)**

(72) Inventor: **Fleischer, Niles Aaron, 12 Pinsker Street Apt. 2-B, Rehovot 76308 (IL)**

(74) Representative: **Wuesthoff, Franz, Dr.-Ing. et al, Patentanwälte Wuesthoff -v. Pechmann-Behrens-Goetz Schweigerstrasse 2, D-8000 München 90 (DE)**

(54) Minimizing voltage delay by high surface area Li anodes.

㊼ Voltage delay in lithium-thionyl chloride cells is reduced by providing an extended surface on the lithium anode, as by embossing.

Patentanwälte
Wuesthoff - v. Pechmann -
Behrens - Goetz
Schweigerstraße 2
8000 München 90

-1-

MINIMIZING VOLTAGE DELAY BY HIGH SURFACE AREA LI ANODES

The present invention is directed to lithium-thionyl chloride cells, and more particularly to provision of means for reducing the voltage delay problem therein.

The lithium-thionyl chloride system is considered to be one of great promise, particularly in view of the high energy density which characterizes the system. The system, and analogous systems are described in U.S. Patent No. 3,926,669, U.K. Specification No. 1,409,307 and elsewhere in the art. As is frequently the case in relation to technical developments of great promise, difficulties have been found in relation to the system which, if solved, would enhance the commercial future of the system. One such difficulty in relation to the lithium-thionyl chloride system is that of "voltage delay", whereby the cell potential falls upon application of load and then rises slowly before reaching its operational value. The problem is accentuated upon a storage of a completed cell, particularly upon storage at an elevated temperature, and has been attributed to passivation of the anode. Solutions to the problem have been suggested. Thus, in U.S. Patent No. 3,933,501, use of a thin, vinyl polymer coating on the anode is suggested to prevent passivation and reduce voltage delay. Again in U.S. Patent No. 4,228,229 modification of the cathode-electrolyte is suggested; i.e., the patent suggests replacement of $LiAlCl_4$ as electrolyte

-2-

dissolved in thionyl chloride with the reaction product of $AlCl_3$ with either $Li_2S$ or $Li_2O$. Even more effective solutions are still desired.

Voltage delay in a lithium-thionyl chloride cell is reduced by employing in said cell a lithium anode having an extended surface.

The extended surface on the lithium anode which is the special feature of the invention may be created by any means which will indent the lithium surface. Thus, embossing with a patterned roll is effective. Scratching or indenting the surface is also operative. Porous powder metallurgy structures having an extended surface are also useful. The invention is effective with various electrolyte salts dissolved in the thionyl chloride cathode.

Examples will now be given:

Example 1

Three-electrode flooded cell tests using lithium strip as test, counter and reference electrodes and a thionyl chloride solution of $LiAlCl_4$ at 1.6M concentration as electrolyte were performed. In testing, current was applied to the test electrode and its polarization response was measured against the reference electrode. Smooth and embossed lithium test electrodes were

-3-

employed, with embossing being accomplished by pressing a fine nickel screen into the lithium foil strip on both sides and then removing it. Test electrodes were coated with ethyl-5-cyanoacrylate (CA) by dipping electrodes into a 1:3 (by volume) solution of CA in dry ethyl acetate twice for 15 seconds with a 60 second rest between applications. Final CA coating thickness was about (0.001 inch) 25.4μm Results of the maximum anode polarization for both coated and uncoated test electrodes are given in Table I, for 6 mA/cm$^2$ applied current, 24 hours of anode storage in electrolyte at 20°C. The data represent the average of 2 to 4 tests.

TABLE I

|  | Uncoated | CA coated |
|---|---|---|
| Smooth | 2.537V | 0.859V |
| Embossed | 1.768V | 0.608V |

The value for the applied current is based on the geometric surface area.

Maximum Anode Polarization (x) is the maximum excursion of the lithium test anode from its rest voltage in response to an applied current and is directly related to voltage delay.

EXAMPLE 2

Further comparisons between smooth anodes and embossed anodes (embossed to increase the surface area by approximately a factor of two) were conducted in a thionyl chloride solution into which had been dissolved about a one molar concentration of $NbCl_5/Li_2S$ with the additions being about equimolar. For this testing the test electrodes were stored five days in electrolyte at room temperature. Applied current was again $mA$/cm$^2$ based upon geometric area. Average maximum anode polarization (volts) is given in Table II as "x", "o" is standard and "n" is number of tests.

TABLE II

|  | Smooth Anode | | Embossed Anode | |
|---|---|---|---|---|
|  | Set A | Set B | Set A | Set B |
| $x$ | 0.686 | 0.775 | 0.298 | 0.378 |
| $\sigma$ | 0.283 | 0.049 | 0.206 | 0.125 |
| $n$ | 4 | 2 | 4 | 3 |

EXAMPLE 3

Lithium-thionyl chloride prismatic cells were produced using, respectively, smooth lithium strip anodes and anodes which had been embossed by pressing a (40-mesh) nickel screen against both

0130504

-5-

sides of the lithium strip anode material prior to cell construction. The cells had a rating of about 1.5 A.h *ampere hours*, a thionyl chloride electrolyte containing $LiAlCl_4$ (1.6M), a porous carbon current collector and a cyanoacrylate coating on the anodes. The cells were stored for 6 weeks at 45°C. When tested at an anode current density of 6 $mA/cm^2$ *milliamperes per square centimeter*, the cells having smooth anodes required 16.05 seconds to reach 2.7 volts (average of 4 cells) whereas the cells having embossed anodes required only 6.24 second to reach 2.7 volts (average of 6 cells).

While the invention has been described herein in conjunction with batteries having thionyl chloride as the "liquid cathode" or "liquid inorganic cathode depolarizer", it is to be appreciated that the art has recognized that other oxyhalide compounds are the equivalent of thionyl chloride. It is to be understood that the invention is applicable to such equivalent systems.

Although the present invention has been described in conjunction with preferred embodiments, it is to be understood that modifications and variations may be resorted to without departing from the spirit and scope of the invention, as those skilled in the art will readily understand. Such modifications and variations are considered to be within the purview and scope of the invention and appended claims.

PATENTANWÄLTE

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2
TELEFON: (089) 66 20 51
TELEGRAMM: PROTECTPATENT
TELEX: 5 24 070

EP-58 381
Rayovac Corporation

- 6 -

C L A I M S

1.      Lithium-oxyhalide liquid cathode cell of reducing voltage delay characterized by a lithium anode having an extended surface as compared to that of a smooth lithium foil.

2.      The cell in accordance with claim 1, wherein said lithium anode has an embossed surface.

3.      The cell in accordance with claim 1 wherein said oxyhalide liquid cathode is thionyl chloride.

8188

0130504

| | **DOCUMENTS CONSIDERED TO BE RELEVANT** | | EP 84107198.8 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| Y | DE - B2 - 1 965 636 (VARTA BATTERIE AG) <br> * Claims 1-3 * <br> -- | 1,2 | H 01 M 4/40 <br> H 01 M 6/14 |
| Y,D | GB - A - 1 409 307 (UNION CARBIDE CORPORATION) <br> * Claims 1-10,15-18; page 2, lines 85-93; page 3, lines 11-22 * <br> ---- | 1-3 | |

TECHNICAL FIELDS
SEARCHED (Int. Cl. 3)

H 01 M

The present search report has been drawn up for all claims

| Place of search | Date of completion of the search | Examiner |
|---|---|---|
| VIENNA | 28-09-1984 | LUX |